# FASCICULE DE BREVET EUROPEEN

(11) **EP 4 543 667 B1**
(45) Date de publication et mention de la délivrance du brevet: **20.05.2026**
(21) Numéro de dépôt: 23738824.4
(22) Date de dépôt: 16.06.2023
(51) Int. Cl.: B29C 70/22, B29C 70/48, B29C 70/86, B29D 99/00, B32B 5/26, B64C 25/10, D03D 15/275, D03D 25/00, F16C 11/04, F16C 7/02, B29B 11/04, B29B 11/16, B64C 25/02, B29K 105/08, B29L 31/30

(54) **PROCEDE DE FABRICATION D'UNE PIECE EN MATERIAU COMPOSITE DESTINEE A ETRE ARTICULEE AVEC D'AUTRES PIECES**
VERFAHREN ZUR HERSTELLUNG EINES VERBUNDSTOFFMATERIALTEILS, DAS ZUR VERBINDUNG MIT ANDEREN TEILEN BESTIMMT IST
METHOD FOR MANUFACTURING A COMPOSITE MATERIAL PART INTENDED TO BE ARTICULATED TO OTHER PARTS

(30) Priorité: 22.06.2022 FR 2206164
(43) Date de publication de la demande: 30.04.2025
(73) Titulaire: Safran Landing Systems, 78140 Vélizy-Villacoublay (FR); SAFRAN, 75015 Paris (FR)
(72) Inventeur: LECLERCQ, Sylvain, Didier, 77550 MOISSY-CRAMAYEL (FR); ROIRAND, Quentin, 77550 MOISSY-CRAMAYEL (FR); COUPE, Dominique, Marie, Christian, 77550 MOISSY-CRAMAYEL (FR); TRAN, Nicolas, 77550 MOISSY-CRAMAYEL (FR)
(74) Mandataire: Cabinet Beau de Loménie
(86) Numéro de dépôt international: PCT/FR2023/050879
(87) Numéro de publication internationale: WO 2023/247869

(56) Documents cités:
- EP-A2- 0 137 261
- DE-A1- 102004 054 345
- DE-B3- 102021 105 040
- FR-A1- 3 102 391
- US-A1- 2007 007 386

## Description

### Domaine Technique

L'invention a pour objet un procédé de fabrication d'une préforme de pièce composite destinée à être articulée avec d'autres pièces à ses extrémités, et un procédé de fabrication d'une telle pièce.

### Technique antérieure

L'emploi de matériaux composites en remplacement de matériaux métalliques peut être proposé dans une optique d'allègement, ce qui est une préoccupation constante dans le cas particulier de pièces d'aéronef. Dans cette vue, le document US 7 704 429 a proposé la fabrication de contrefiches de train d'atterrissage en matériau composite qui comprennent des régions, dites chapes, qui sont destinées à l'articulation et aux introductions d'effort avec d'autres pièces et sont formées par une structure stratifiée avec intercalation de plis entre des plis primaires prolongeant le corps du renfort. Cette solution peut néanmoins présenter des inconvénients. En effet, les chapes qui ont une configuration laminée peuvent conduire à une augmentation de la taille des zones d'introduction d'effort par rapport aux pièces métalliques afin d'éviter le risque de délamination. Le gain de masse du système global devient alors moins intéressant et l'intégration de la pièce plus contraignante du fait d'un encombrement accru. Un autre problème est que la technique de fabrication proposée met en œuvre une intervention manuelle significative qui peut aboutir à des non-conformités et à une augmentation du coût. Enfin les performances mécaniques du matériau composite proposé dans ce document peuvent être améliorées, notamment en termes de tenue à la compression sur une zone médiane de la longueur de la pièce dite zone courante. Une option pour répondre à cela est d'ajouter de la matière en zone courante ce qui pénalise alors la masse et n'apporte donc pas complètement satisfaction. US2007/007386A1 concerne un procédé de fabrication d'une préforme fibreuse d'une pièce composite.

L'invention propose de répondre à tout ou partie des inconvénients précités.

### Exposé de l'invention

L'invention vise un procédé de fabrication d'une préforme fibreuse d'une pièce composite destinée à être articulée avec d'autres pièces, comprenant au moins :
- la formation par tissage d'une première texture fibreuse d'âme de forme élancée s'étendant selon une direction longitudinale et comprenant, en section transversale, une portion centrale présentant, sur ses côtés opposés, deux bords de positionnement comprenant chacun deux portions fibreuses latérales déliées,
- la mise en forme de la première texture fibreuse comprenant au moins le déploiement des portions latérales déliées pour former une surface de positionnement définie par les portions latérales ainsi déployées et par une portion fibreuse intercalaire, située entre ces portions déployées, formée par un prolongement de la portion centrale ou par cette portion centrale, et
- le positionnement d'une deuxième texture fibreuse tissée de ceinture sur les portions latérales déployées et la portion fibreuse intercalaire, la deuxième texture définissant une boucle autour de la première texture mise en forme de sorte à définir, aux extrémités longitudinales entre les première et deuxième textures, des espaces libres destinés à une articulation avec d'autres pièces.

L'invention propose une solution basée sur un assemblage entre une âme et une ceinture résultant chacune d'une opération de tissage avec une surface de positionnement de la ceinture formée par la portion intercalaire et les portions déliées déployées situées de part et d'autre de celle-ci. Une telle solution fournit une interface de bonne qualité pour l'assemblage, garantissant une bonne tenue de la pièce en matériau composite, et permet notamment l'amélioration des performances mécaniques par rapport à US 7 704 429 notamment en termes de tenue à la compression, sans pénaliser la masse de la structure. En particulier, on peut avantageusement avoir une surface de positionnement de forme sensiblement plane du fait de la présence de la portion intercalaire, et ce en s'affranchissant de l'utilisation d'un matériau de comblement tiers entre les portions déployées. Les portions déliées permettent, après mise en forme, d'augmenter la rigidité selon tous les axes de sollicitation de la pièce (optimisation de l'inertie). La technologie ceinturée selon l'invention permet également d'être plus économe en termes de coût de fabrication que la solution discutée de l'art antérieur.

Selon un exemple, chaque bord de positionnement comprend en outre une texture fibreuse intercalaire prolongeant la portion centrale et située entre les portions fibreuses latérales déliées, et la mise en forme comprend en outre une découpe de cette texture fibreuse intercalaire de sorte à former la portion fibreuse intercalaire. Selon cet exemple, la portion intercalaire est formée par un prolongement textile résiduel de la portion centrale au sein des bords de positionnement résultant de la découpe de la texture fibreuse intercalaire.

Selon une variante, la portion centrale comprend des peaux tissées et un ensemble de fils non tissés situés entre les peaux tissées et maintenus ensemble par des fils provenant de celles-ci, les peaux tissées s'étendant au-delà de la portion centrale dans les bords de positionnement pour former les portions fibreuses latérales déliées, et dans lequel ces portions déliées sont déployées de sorte à les rabattre à la hauteur de l'ensemble de fils non tissés lors de la mise en forme.

Selon cette variante, la portion intercalaire est formée par la portion centrale elle-même, située au même niveau que les portions déliées déployées, et permet de ne pas avoir à réaliser l'opération de découpe décrite plus haut. En outre, l'ensemble de fils non tissés forme une portion de raidissement qui permet d'améliorer davantage encore la résistance à la compression par rapport à une structure intégralement obtenue par tissage tridimensionnel.

Dans un exemple de réalisation, les portions fibreuses latérales déliées sont formées par tissage de premiers et de deuxièmes fils et présentent un premier rapport volumique de premiers fils relativement aux deuxièmes fils, et la deuxième texture est formée par tissage de premiers et de deuxièmes fils et présente un deuxième rapport volumique de premiers fils relativement aux deuxièmes fils, l'écart relatif entre les premier et deuxième rapports volumiques n'excédant pas 25%, par exemple n'excédant pas 10%.

Une telle caractéristique participe à améliorer davantage encore la tenue mécanique de la pièce en matériau composite à obtenir.

Dans un exemple de réalisation, les première et deuxième textures sont en fils de carbone.

L'invention vise également un procédé de fabrication d'une pièce en matériau composite destinée à être articulée avec d'autres pièces, comprenant au moins :
- la formation d'une préforme fibreuse de la pièce à obtenir par mise en œuvre d'un procédé tel que décrit plus haut, et
- la formation d'une matrice dans une porosité de la préforme fibreuse ainsi obtenue.

Dans un exemple de réalisation, la matrice est organique.

Dans un exemple de réalisation, la pièce est une contre-fiche de train d'atterrissage, une partie d'une contre-fiche de train d'atterrissage ou une barre de frein.

### Brève description des dessins

[Fig. 1] La figure 1 représente, de manière schématique, un exemple de première texture fibreuse d'âme utilisable dans le cadre de l'invention.
[Fig. 2] La figure 2 représente, de manière schématique, une section transversale de la première texture selon la figure 1.
[Fig. 3A] La figure 3A représente une première étape d'un exemple de mise en forme de la première texture selon l'invention.
[Fig. 3B] La figure 3B représente une deuxième étape de l'exemple de mise en forme de la première texture selon l'invention.
[Fig. 3C] La figure 3C représente une troisième étape de l'exemple de mise en forme de la première texture selon l'invention.
[Fig. 3D] La figure 3D représente une quatrième étape de l'exemple de mise en forme de la première texture selon l'invention.
[Fig. 4] La figure 4 représente, de manière schématique, un exemple de préforme de pièce en matériau composite obtenue après positionnement de la deuxième texture de ceinture sur la première texture mise en forme.
[Fig. 5] La figure 5 représente, de manière schématique, une section transversale d'une variante de première texture utilisable dans le cadre de l'invention.
[Fig. 6A] La figure 6A représente une première étape d'une mise en forme possible de la texture de la figure 5.
[Fig. 6B] La figure 6B représente une deuxième étape de cette mise en forme.
[Fig. 6C] La figure 6C représente une troisième étape de cette mise en forme avec le positionnement de la ceinture sur cette texture mise en forme.

### Description des modes de réalisation

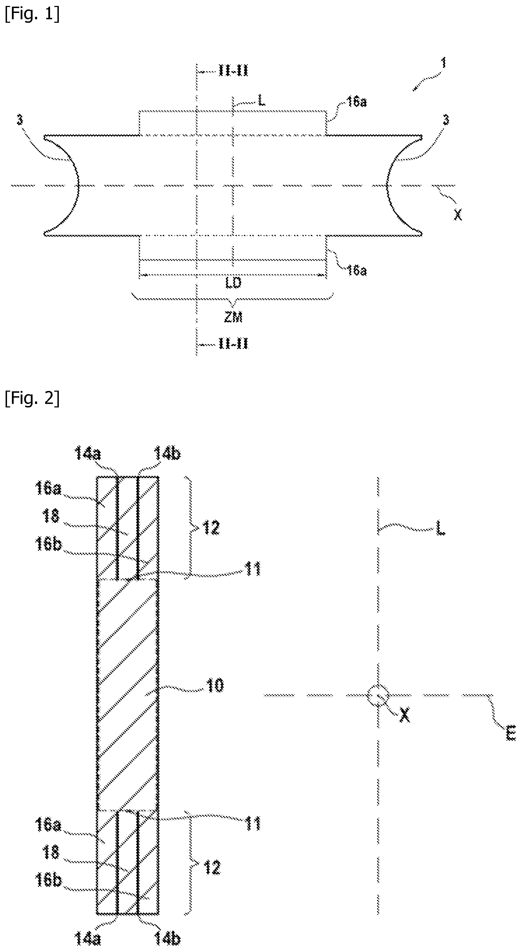

La figure 1 illustre un exemple de première texture 1 fibreuse utilisable dans le cadre de l'invention. La première texture 1 a une forme élancée en s'étendant le long d'une direction longitudinale X. Elle peut être obtenue par tissage tridimensionnel en une seule pièce en ménageant des zones de déliaison, comme il sera décrit dans la suite. Par « tissage tridimensionnel » ou « tissage 3D », on entend un mode de tissage par lequel certains au moins des premiers fils dirigés selon la direction X lient des deuxièmes fils transverses aux premiers fils sur plusieurs couches de deuxièmes fils. Un tel tissage peut être réalisé dans un métier à tisser de type Jacquard, de façon connue en soi. La première texture 1 est destinée à former l'âme du renfort fibreux de la pièce à obtenir. On peut par exemple utiliser une armure de tissage « interlock » pour former la première texture 1. La première texture 1 présente des extrémités longitudinales 3 qui ont une forme incurvée, par exemple sensiblement circulaire, et qui sont destinées à définir, dans la pièce à obtenir, des espaces libres dédiés à l'articulation avec d'autres pièces. Dans l'exemple illustré, les extrémités longitudinales 3 sont sensiblement de même dimension mais l'homme du métier reconnaîtra que d'autres variantes sont possibles et en particulier que l'invention peut s'appliquer à une pièce ayant des extrémités longitudinales de dimension différente.

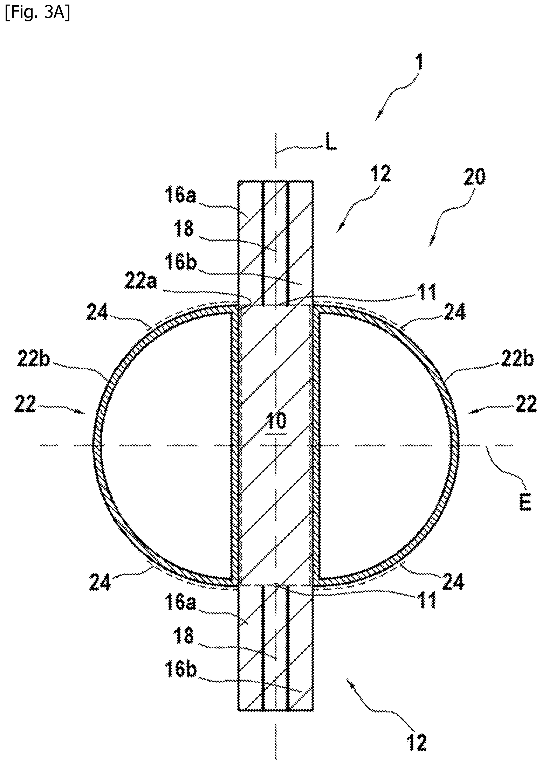

La première texture 1 peut être sous la forme d'une bande et la figure 2 représente une section transversale de celle-ci prise transversalement à la direction longitudinale X. La première texture 1 comprend une portion centrale 10 qui présente sur ses côtés opposés 11 deux bords 12 qui sont destinés au positionnement d'une deuxième texture, dits bords 12 de positionnement. La portion centrale 10 ainsi que les bords 12 s'étendent chacun le long de la direction longitudinale X. La portion centrale 10 est située entre les bords 12. Dans l'exemple illustré, les bords 12 ainsi que la portion centrale 10 sont décalés le long de la largeur de la première texture (direction L). Chaque bord 12 de positionnement présente successivement, dans l'exemple illustré le long de l'épaisseur de la première texture 1 (direction E) qui correspond à sa plus petite dimension, une première portion fibreuse 16a latérale déliée, une texture fibreuse 18 intercalaire et une deuxième portion fibreuse 16b latérale déliée. Une première zone de déliaison 14a est présente entre la première portion 16a et la texture 18 et une deuxième zone de déliaison 14b est présente entre la texture 18 et la deuxième portion 16b. Dans les zones de déliaison 14a, 14b on a volontairement omis de tisser entre elles des couches de fils de la texture 18 et de la portion 16a, 16b de sorte à pouvoir déployer ces dernières comme il sera décrit dans la suite. Les zones de déliaison 14a, 14b sont initiées depuis les côtés 11. Chacune des portions 16a, 16b prolonge la portion centrale 10 au-delà des côtés 11. Dans l'exemple illustré, les portions 16a, 16b ainsi que la texture intercalaire 18 sont obtenues par tissage tridimensionnel comme la portion centrale 10 mais on ne sort pas du cadre de l'invention lorsqu'il en est autrement, en particulier la texture intercalaire peut être formée de couches de fils non tissés (couches de fils unidirectionnelles). On notera que les zones de déliaison 14a, 14b peuvent s'étendre sur tout ou partie de la longueur de la première texture 1, notamment sur une longueur LD au moins 50% de celle-ci. Les zones de déliaison 14a, 14b peuvent en particulier être présentes sur la zone médiane ZM de la longueur de la première texture 1. L'exemple considéré concerne le cas où la hauteur des déliaisons 14a, 14b mesurée le long de la direction L n'évolue pas le long de la direction longitudinale X mais on ne sort pas du cadre de l'invention lorsque c'est le cas, notamment dans le cas particulier où les extrémités longitudinales 3 ont des dimensions différentes. En particulier, la hauteur des déliaisons 14a, 14b peut varier de sorte à atteindre un maximum dans la zone médiane ZM, favorisant ainsi davantage encore la qualité de l'interface avec la ceinture et donc les propriétés mécaniques de la zone courante, notamment l'inertie de l'âme, augmentant ainsi la tenue au flambage sous chargement de compression ou de modes vibratoires. On vient de décrire une structure possible de première texture 1, la suite s'attache à détailler, en lien avec les figures 3A à 3D, une mise en forme possible pour celle-ci en vue de préparer le positionnement de la deuxième texture de ceinture.

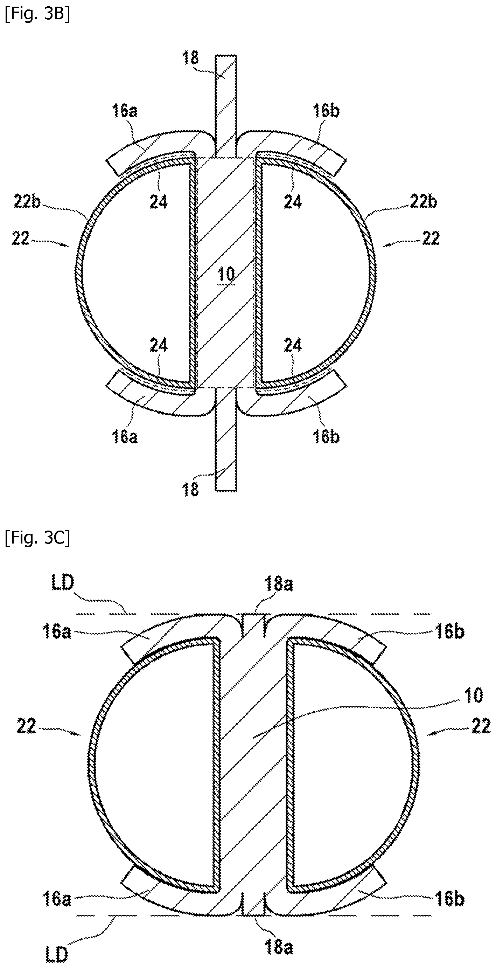

La première texture 1 est positionnée dans un premier outillage 20 qui comprend deux parties 22 destinées à venir en appui sur la première texture 1, comme illustré à la figure 3A. Plus précisément, la portion centrale 10 est maintenue entre les parties 22 lesquelles peuvent éventuellement appliquer une pression de compactage à celle-ci s'il est souhaité d'ajuster le taux de fibres. Les deux parties 22 peuvent être décalées le long de la direction E comme illustré. Les parties 22 présentent une face 22a, qui peut être sensiblement plane, venant en appui sur la portion centrale 10 et une face incurvée 22b s'étendant depuis la face 22a en direction opposée de la première texture 1. La face 22b définit en particulier au voisinage des bords 12 de positionnement une zone 24 sur laquelle les portions déliées 16a, 16b sont destinées à être drapées lors de la découpe de la texture intercalaire 18. Ainsi comme illustré à la figure 3B, les portions déliées 16a, 16b sont écartées l'une de l'autre de sorte à les positionner sur la zone 24 d'une partie 22 respective et les dégager ainsi de la texture intercalaire 18. Les portions déliées 16a, 16b rabattues sur la zone 24 sont maintenues à cette zone 24 par des moyens connus en soi, par exemple par pincement. Il est ensuite procédé à la découpe de la texture intercalaire 18 le long d'une ligne de découpe LD comme représenté à la figure 3C. Cette découpe peut être réalisée par découpe au jet d'eau mais l'homme du métier reconnaîtra que d'autres techniques sont envisageables. Comme illustré, la découpe de la texture intercalaire 18 peut être effectuée au ras des portions déliées 16a, 16b maintenues sur les parties 22. En outre, la forme incurvée de la face 22b permet de garantir que les portions déliées 16a, 16b s'étendent en s'écartant de la ligne de découpe LD évitant ainsi tout risque d'endommagement lors de cette opération. Le résidu de découpe de la texture 18 forme la portion intercalaire 18a qui est située entre les portions déliées 16a, 16b et va servir d'appui à la texture de ceinture. La portion 18a est située dans le prolongement textile de la portion centrale 10. La portion textile 18a peut avoir une longueur suffisamment faible pour présenter une rigidité suffisante lui permettant de garder une forme droite le long de la direction L en l'absence de tout outillage de maintien.

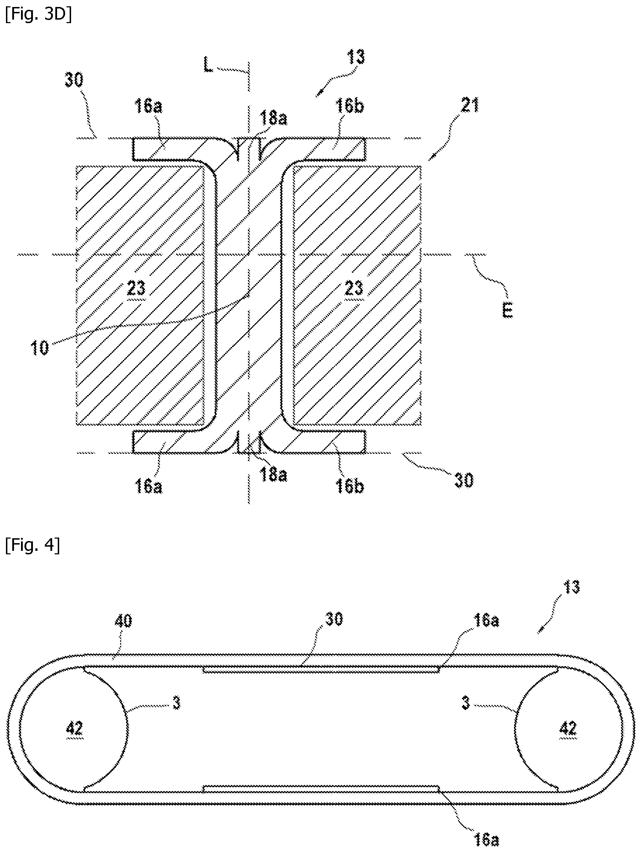

Une fois cette découpe réalisée, la première texture est extraite de l'outillage 20 et est positionnée entre deux formes 23 d'un deuxième outillage 21 distinct qui est un outillage de mise en forme à la forme de l'âme de la pièce à obtenir. Les formes 23 peuvent être décalées le long de la direction E comme illustré. La figure 3D illustre cette mise en forme où les portions déliées 16a et 16b sont déployées sur les formes 23 de sorte à former des ailettes latérales et dans laquelle la première texture 13 ainsi mise en forme présente une forme en I en section transversale (dite forme en double cornière). Dans l'exemple illustré, chaque portion déliée 16a, 16b déployée forme un coude avec la portion centrale 10, avec un angle sensiblement égal à 90° avec la direction L. La première texture 13 mise en forme définit de part et d'autre de la portion centrale 10, au niveau des bords 12 de positionnement, une surface de positionnement 30 sur laquelle la deuxième texture de ceinture est destinée à être déposée. La surface de positionnement 30 est définie par les portions déliées 16a, 16b déployées ainsi que par la portion intercalaire 18a prolongeant la portion centrale 10 laquelle permet de combler le manque de matière qui résulterait du déploiement des portions déliées 16a, 16b. On obtient ainsi une bonne interface avec la ceinture et en particulier une surface de positionnement 30 de forme sensiblement plane, comme illustré à la figure 3D. L'exemple qui vient d'être décrit met en œuvre deux outillages différents, l'un pour la découpe, l'autre pour la mise en forme de la première texture mais on ne sort pas du cadre de l'invention si un même outillage est utilisé pour ces deux opérations. Le procédé se poursuit en positionnant autour de la première texture 13 ainsi mise en forme par l'outillage 21 une deuxième texture fibreuse 40 tissée de ceinture, comme illustré à la figure 4. La deuxième texture 40 peut avoir une forme de bande qui est enroulée autour de la première texture 13 mise en forme. Lors de son positionnement, la deuxième texture 40 vient en appui sur les portions déployées 16a, 16b mais également sur la portion intercalaire 18a ce qui permet d'offrir une bonne interface entre les deux textures. La deuxième texture 40 peut se présenter sous la forme d'une même bande de tissu mais on ne sort pas du cadre de l'invention si elle est sous la forme de plusieurs bandes mises bout à bout ou côte à côte. La deuxième texture 40 peut également être obtenue par tissage tridimensionnel, par exemple avec une armure « interlock ». La deuxième texture 40 définit une boucle fermée autour de la première texture 13 mise en forme et définit des espaces libres 42 destinés à l'articulation avec les autres pièces. On peut provisoirement utiliser des inserts (non représentés) au niveau des extrémités longitudinales 3 et enrouler la deuxième texture 40 autour de ces derniers de sorte à garantir la forme souhaitée pour les régions d'extrémité. Comme indiqué plus haut, les rapports volumiques entre les fils de chaîne et de trame de chacune des première 11 et deuxième 40 textures peuvent être similaires. Ces rapports volumiques correspondent au rapport : [volume occupé par les fils de chaîne]/[volume occupé par les fils de trame] pour chaque texture considérée.

On positionne alors un contre-moule autour de l'ensemble des deux textures 13 et 40 de sorte à définir avec l'outillage 21 une cavité d'introduction du matériau de matrice et l'on procède alors à la densification de l'ensemble, par exemple par introduction d'une résine, comme une résine époxy, suivie d'une réticulation de celle-ci s'il s'agit d'une résine thermodurcissable ou d'un refroidissement s'il s'agit d'une résine thermoplastique. La formation de la matrice peut être réalisée par technique de moulage par transfert de résine (« Resin Transfer Molding ») qui correspond à une technique connue en soi. On obtient ainsi une pièce en matériau composite destiné à être articulée avec d'autres pièces à ses extrémités longitudinales. Le renfort fibreux de la pièce peut être formé de fils de carbone et la pièce peut présenter une matrice organique comme il vient d'être décrit. La pièce peut ou non être destinée à une application aéronautique. La pièce peut par exemple être une bielle, une contre-fiche de train d'atterrissage ou un élément constitutif de celle-ci, ou encore une barre de frein. La pièce peut être destinée à subir principalement des efforts de traction et de compression en fonctionnement. La pièce obtenue peut être montée à d'autres pièces en positionnant au travers des espaces libres 42 un axe d'articulation pour la liaison à d'autres pièces ainsi qu'un insert de contact avec cet axe.

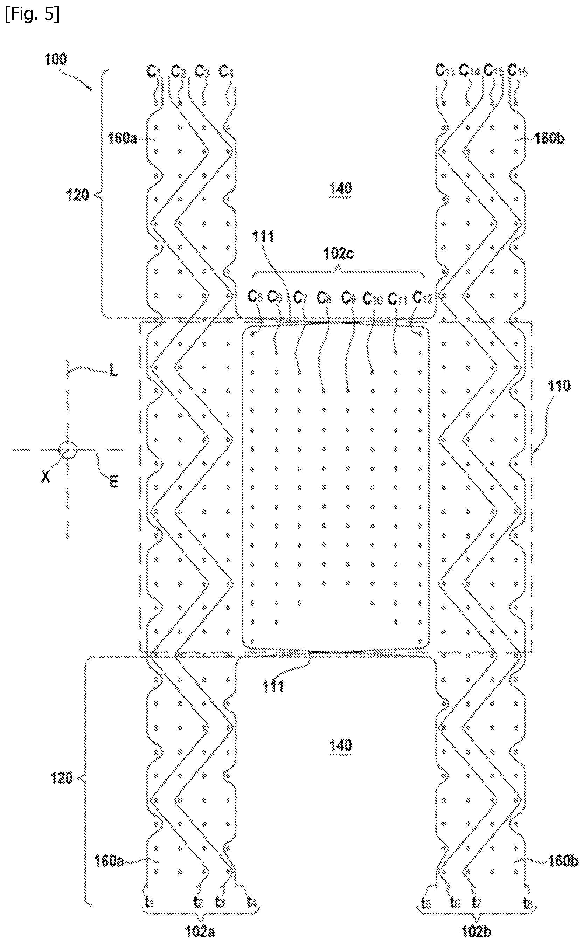

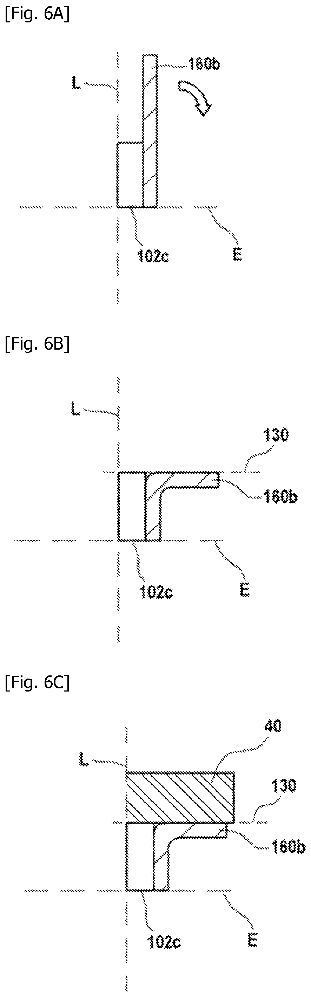

L'exemple qui vient d'être décrit concerne le cas d'une portion intercalaire 18a formée par un prolongement textile de la portion centrale 10. Néanmoins, l'invention vise également le cas où la portion centrale elle-même se retrouve entre les portions déliées déployées de sorte à offrir une surface d'appui à la deuxième texture de ceinture. Un tel exemple va, à présent, être abordé en lien avec les figures 5 et 6A à 6C.

La figure 5 est une vue en section transversale d'une variante de première texture 100 qui comprend, sur tout ou partie de sa longueur, une portion centrale 110 présentant, sur ses côtés opposés 111, deux bords 120 de positionnement qui comprennent chacun des portions latérales 160a, 160b déliées séparées par une zone de déliaison 140 permettant un écartement de ces portions 160a, 160b l'une par rapport à l'autre. Comme dans l'exemple précédent, les bords 120 de positionnement et la portion centrale 110 sont décalés le long de la direction L de la largeur et les portions déliées 160a, 160b sont décalées le long de la direction E d'épaisseur. La première texture 100 comprend des peaux 102a, 102b tissées, par exemple obtenues par tissage tridimensionnel, qui forment une partie de la portion centrale 110 et s'étendent dans le prolongement de cette portion de sorte à former les portions déliées 160a, 160b. Les peaux 102a, 102b sont formées d'un tissage entre des premiers fils C1-C4 et C13-C16 s'étendant le long de la direction longitudinale X avec des deuxièmes fils t1-t8 s'étendant le long de la direction L. D'une manière générale, on reconnaîtra que le nombre de couches de fils ainsi que l'armure de tissage illustrés ne sont fournis qu'à titre d'exemple et peuvent être modifiés sans s'écarter du périmètre de l'invention. La portion centrale 110 comprend également un ensemble 102c de fils C5-C12 non tissés situés entre les peaux 102a, 102b et maintenus ensemble par des fils provenant de celles-ci. En effet, on constate que le fil t4 s'étend dans la première peau 102a en dehors de la portion centrale 110 et est dévié afin de sortir de cette première peau 102a pour lier l'ensemble 102c de fils C5-C12 dans la portion centrale 110. De même, le fil t5 s'étend dans la deuxième peau 102b en dehors de la portion centrale 110 et est dévié afin de sortir de cette deuxième peau 102b pour lier l'ensemble 102c de fils C5-C12 dans la portion centrale 110 du côté opposé au fil t4. On obtient ainsi une encapsulation de l'ensemble 102c de fils C5-C12 non tissés entre les peaux 102a, 102b, ces fils C5-C12 étant maintenus en place par les fils déviés t4-t5. Dans l'exemple illustré, on a dans la portion centrale 110 successivement le long de la direction d'épaisseur E : la première peau 102a, l'ensemble 102c de fils non-tissés et la deuxième peau 102b. On notera que l'ensemble 102c de fils non-tissés n'est présent que dans la portion centrale 110 et pas dans les bords 120 de positionnement. On peut également remarquer que les fils C5-C12 peuvent être non tissés sur une partie seulement de la longueur de la première texture 100, par exemple sur sa zone médiane ZM, mais peuvent être tissés sur les extrémités longitudinales de la première texture 100. La longueur où les fils C5-C12 sont non-tissés peut être supérieure ou égale à 50% de la longueur de la première texture 100. Les figures 6A à 6C illustrent, de manière simplifiée, la mise en forme de la première texture de la figure 5 ainsi que le positionnement de la deuxième texture 40 de ceinture, étant entendu que la configuration est symétrique par rapport aux directions L et E. Dans l'exemple considéré, il y a déploiement des portions déliées 160a, 160b sur une forme (non illustrée) de sorte à former un angle sensiblement de 90° avec la direction L et à positionner les portions déliées 160a, 160b à la hauteur de l'ensemble 102c de fils non-tissés. Cette hauteur est prise le long de la direction L. On obtient ainsi une surface de positionnement 130 de forme sensiblement plane avec, au même niveau, les portions déliées 160a, 160b ainsi que l'ensemble de fils 102c de la portion centrale 110 qui est situé entre ces portions déliées et définit ainsi une surface d'appui pour la texture de ceinture 40.

## Revendications

1. Procédé de fabrication d'une préforme fibreuse d'une pièce composite destinée à être articulée avec d'autres pièces, comprenant au moins :
- la formation par tissage d'une première texture (1 ; 100) fibreuse d'âme de forme élancée s'étendant selon une direction longitudinale (X) et comprenant, en section transversale, une portion centrale (10 ; 110) présentant, sur ses côtés opposés (11 ; 111), deux bords (12 ; 120) de positionnement comprenant chacun deux portions fibreuses (16a ; 16b ; 160a ; 160b) latérales déliées,
- la mise en forme de la première texture fibreuse comprenant au moins le déploiement des portions latérales déliées pour former une surface (30 ; 130) de positionnement définie par les portions latérales ainsi déployées et par une portion fibreuse intercalaire, située entre ces portions déployées, formée par un prolongement (18a) de la portion centrale ou par cette portion centrale (110), et
- le positionnement d'une deuxième texture (40) fibreuse tissée de ceinture sur les portions latérales déployées et la portion fibreuse intercalaire, la deuxième texture définissant une boucle autour de la première texture mise en forme de sorte à définir, aux extrémités longitudinales entre les première et deuxième textures, des espaces libres (42) destinés à une articulation avec d'autres pièces.

2. Procédé selon la revendication 1, dans lequel chaque bord (12) de positionnement comprend en outre une texture fibreuse (18) intercalaire prolongeant la portion centrale (10) et située entre les portions fibreuses (16a ; 16b) latérales déliées, et dans lequel la mise en forme comprend en outre une découpe de cette texture fibreuse intercalaire de sorte à former la portion fibreuse (18a) intercalaire.

3. Procédé selon la revendication 1, dans lequel la portion centrale (110) comprend des peaux tissées (102a ; 102b) et un ensemble de fils (102c) non tissés situés entre les peaux tissées et maintenus ensemble par des fils (t4 ; t5) provenant de celles-ci, les peaux tissées s'étendant au-delà de la portion centrale dans les bords (120) de positionnement pour former les portions fibreuses (160a ; 160b) latérales déliées, et dans lequel ces portions déliées sont déployées de sorte à les rabattre à la hauteur de l'ensemble de fils non tissés lors de la mise en forme.

4. Procédé selon l'une quelconque des revendications 1 à 3, dans lequel les portions fibreuses (16a ; 16b ; 160a ; 160b) latérales déliées sont formées par tissage de premiers et de deuxièmes fils et présentent un premier rapport volumique de premiers fils relativement aux deuxièmes fils, et dans lequel la deuxième texture (40) est formée par tissage de premiers et de deuxièmes fils et présente un deuxième rapport volumique de premiers fils relativement aux deuxièmes fils, l'écart relatif entre les premier et deuxième rapports volumiques n'excédant pas 25%.

5. Procédé selon l'une quelconque des revendications 1 à 4, dans lequel les première (1 ; 100) et deuxième (40) textures sont en fils de carbone.

6. Procédé de fabrication d'une pièce en matériau composite destinée à être articulée avec d'autres pièces, comprenant au moins :
- la formation d'une préforme fibreuse de la pièce à obtenir par mise en œuvre d'un procédé selon l'une quelconque des revendications 1 à 5, et
- la formation d'une matrice dans une porosité de la préforme fibreuse ainsi obtenue.

7. Procédé selon la revendication 6, dans lequel la matrice est organique.

8. Procédé selon la revendication 6 ou 7, dans lequel la pièce est une contre-fiche de train d'atterrissage, une partie d'une contre-fiche de train d'atterrissage ou une barre de frein.

## Patentansprüche

1. Verfahren zur Herstellung einer Faservorform eines Verbundteils, das dazu bestimmt ist, mit anderen Teilen gelenkig verbunden zu werden, umfassend zumindest:
- die Bildung durch Verwebung einer ersten Steg-Fasertextur (1; 100) mit langgestreckter Form, die sich entlang einer Längsrichtung (X) erstreckt und im Querschnitt einen zentralen Abschnitt (10; 110) umfasst, der an seinen gegenüberliegenden Seiten (11; 111) zwei Positionierungsränder (12; 120) umfasst, die jeweils zwei seitliche unverbundene Faserabschnitte (16a; 16b; 160a; 160b) umfassen,
- das Informbringen der ersten Fasertextur, umfassend zumindest das Ausrollen der seitlichen unverbundenen Abschnitte, um eine Positionierungs-Oberfläche (30; 130) zu bilden, die durch die so ausgerollten seitlichen Abschnitte und einen Zwischen-Faserabschnitt definiert wird, der sich zwischen diesen ausgerollten Abschnitten befindet und durch eine Verlängerung (18a) des zentralen Abschnitts oder durch diesen zentralen Abschnitt (110) gebildet wird, und
- die Positionierung einer zweiten gewebten Gürtel-Fasertextur (40) an den ausgerollten seitlichen Abschnitten und dem Zwischen-Faserabschnitt, wobei die zweite Textur eine Schleife um die erste Textur herum definiert, die auf eine Weise in Form gebracht wird, um an den Längsenden zwischen der ersten und zweiten Textur freie Räume (42) zu bilden, die für eine gelenkige Verbindung mit anderen Teilen bestimmt sind.

2. Verfahren nach Anspruch 1, wobei jeder Positionierungsrand (12) ferner eine Zwischen-Fasertextur (18) umfasst, die den zentralen Abschnitt (10) verlängert und sich zwischen den ausgerollten seitlichen unverbundenen Faserabschnitten (16a; 16b) befindet, und wobei das Informbringen ferner ein Zuschneiden dieser Zwischen-Fasertextur auf eine Weise umfasst, um den Zwischen-Faserabschnitt (18a) zu bilden.

3. Verfahren nach Anspruch 1, wobei der zentrale Abschnitt (110) gewebte Häute (102a; 102b) und eine Anordnung von nicht verwebten Fäden (102c) umfasst, die sich zwischen den gewebten Häuten befinden und durch Fäden (t4; t5) zusammengehalten werden, die aus diesen hervorkommen, wobei die gewebten Häute sich über den zentralen Abschnitt in den Positionierungsrändern (120) hinaus erstrecken, um die seitlichen unverbundenen Faserabschnitte (160a; 160b) zu bilden, und wobei diese unverbundenen Abschnitte auf eine Weise ausgerollt werden, um sie während des Informbringens auf der Höhe der Anordnung von nicht verwebten Fäden zurückzuschlagen.

4. Verfahren nach einem der Ansprüche 1 bis 3, wobei die seitlichen unverbundenen Faserabschnitte (16a; 16b; 160a; 160b) durch Verwebung von ersten und zweiten Fäden gebildet werden und ein erstes Volumenverhältnis von ersten Fäden relativ zu den zweiten Fäden aufweisen, und wobei die zweite Textur (40) durch Verweben von ersten und zweiten Fäden gebildet wird und ein zweites Volumenverhältnis von ersten Fäden relativ zu den zweiten Fäden aufweist, wobei der relative Abstand zwischen dem ersten und dem zweiten Volumenverhältnis 25 % nicht überschreitet.

5. Verfahren nach einem der Ansprüche 1 bis 4, wobei die erste (1; 100) und zweite (40) Textur aus Kohlenstofffäden bestehen.

6. Verfahren zur Herstellung eines Teils aus Verbundmaterial, das dazu bestimmt ist, mit anderen Teilen gelenkig verbunden zu werden, umfassend zumindest:
- die Bildung einer Faservorform des zu erhaltenden Teils durch Durchführung eines Verfahrens nach einem der Ansprüche 1 bis 5, und
- die Bildung einer Matrix in einer Porosität der so erhaltenen Faservorform.

7. Verfahren nach Anspruch 6, wobei die Matrix organisch ist.

8. Verfahren nach Anspruch 6 oder 7, wobei das Teil eine Strebe eines Fahrwerks, ein Teil einer Strebe eines Fahrwerks oder eine Bremsstange ist.

## Claims

1. A method for manufacturing a fiber preform for a composite part intended to be articulated to other parts, comprising at least:
- forming by weaving a first fiber core texture (1; 100) of elongate shape extending in a longitudinal direction (X) and comprising, in cross section, a central portion (10; 110) having, on its opposite sides (11; 111), two positioning edges (12; 120) each comprising two non-interlinked lateral fibrous portions (16a; 16b; 160a; 160b),
- shaping the first fiber texture which involves at least opening out the non-interlinked lateral portions to form a positioning surface (30; 130) defined by the lateral portions thus opened out and by an interleaved fibrous portion, situated between these opened-out portions, formed by a prolongation (18a) of the central portion or by this central portion (110), and
- positioning a second woven belt fiber texture (40) over the opened-out lateral portions and the interleaved fibrous portion, the second texture forming a loop around the shaped first texture so as to define, at the longitudinal ends between the first and second textures, empty spaces (42) intended for articulation to other parts.

2. The method according to claim 1, wherein each positioning edge (12) further comprises an interleaved fiber texture (18) extending the central portion (10) and located between the non-interlinked lateral fibrous portions (16a; 16b), and wherein the shaping further comprises cutting this interleaved fiber texture so as to form the interleaved fibrous portion (18a).

3. The method according to claim 1, wherein the central portion (110) comprises woven skins (102a; 102b) and a set of non-woven yarns (102c) located between the woven skins and held together by yarns (t4; t5) coming therefrom, the woven skins extending beyond the central portion into the positioning edges (120) to form the non-interlinked lateral fibrous portions (160a; 160b), and wherein these non-interlinked portions are opened-out so as to fold them down to the height of the set of non-woven yarns during shaping.

4. The method according to any one of claims 1 to 3, wherein the non-interlinked lateral fibrous portions (16a; 16b; 160a; 160b) are formed by weaving first and second yarns and have a first volume ratio of first yarns relative to the second yarns, and wherein the second texture (40) is formed by weaving first and second yarns and has a second volume ratio of first yarns relative to the second yarns, the relative difference between the first and second volume ratios not exceeding 25%.

5. The method according to any one of claims 1 to 4, wherein the first (1; 100) and second (40) textures are made of carbon yarns.

6. A method for manufacturing a composite material part intended to be articulated to other parts, comprising at least:
- forming a fiber preform for the part to be obtained by implementing a method according to any one of claims 1 to 5, and
- forming a matrix in a porosity of the fiber preform thus obtained.

7. The method according to claim 6, wherein the matrix is organic.

8. The method according to claim 6 or 7, wherein the part is a landing gear strut, a segment of a landing gear strut or a brake bar.
